# EUROPÄISCHE PATENTSCHRIFT

(11) **EP 1 637 946 B1**
(45) Veröffentlichungstag und Bekanntmachung des Hinweises auf die Patenterteilung: **19.12.2018**
(21) Anmeldenummer: 05108683.3
(22) Anmeldetag: 20.09.2005
(51) Int. Cl.: G05B 19/12, B23Q 17/09

(54) **Werkzeug mit einer Speichereinrichtung**
Tool comprising a memory
Outil avec une mémoire

(30) Priorität: 21.09.2004 DE 102004045783
(43) Veröffentlichungstag der Anmeldung: 22.03.2006
(73) Patentinhaber: Schöberl, Peter, 86424 Dinkelscherben (DE)
(72) Erfinder: Schöberl, Peter, 86424 Dinkelscherben (DE)
(74) Vertreter: Jannig, Peter

(56) Entgegenhaltungen:
- EP-A- 0 132 528
- WO-A-03/085468
- DE-A1- 10 129 392
- DE-A1- 10 212 064
- US-A- 4 742 470
- US-A- 4 890 306
- TOLLNER K: "WERKZEUGE MIT KOPFCHEN: INTELLIGENZ DURCH SPEICHERCHIPS" VDI Z, VDI VERLAG, DUSSELDORF, DE, Bd. 130, Nr. 6, 1. Juni 1988 (1988-06-01), Seiten 70-73, XP000026947 ISSN: 0042-1766

## Beschreibung

Die vorliegende Erfindung betrifft eine Vorrichtung gemäß dem Oberbegriff des Patentanspruchs 1.

Ein Werkzeug, durch welches ein flächenförmiges Material in eine vorgegebene andere Form bringbar ist, ist beispielsweise ein Thermoformwerkzeug, durch welches ein flächenförmiger Kunststoff in eine andere Form, beispielsweise in die Form eines Bechers oder einer Schale bringbar ist.

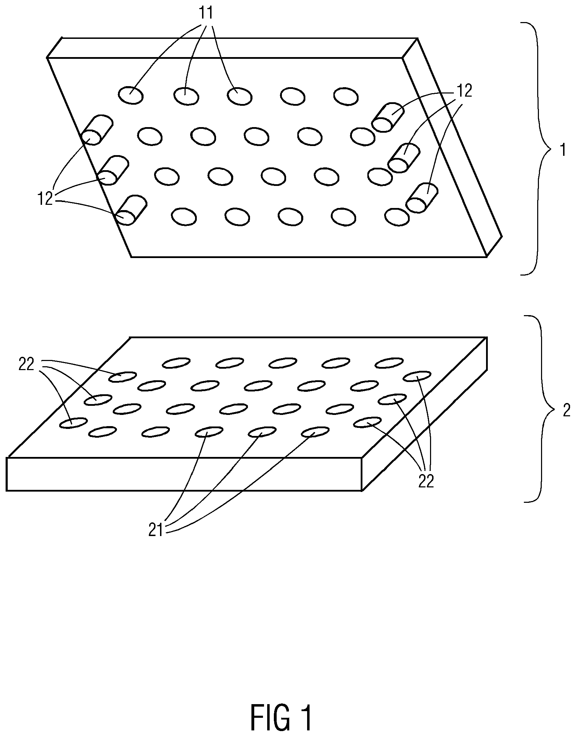

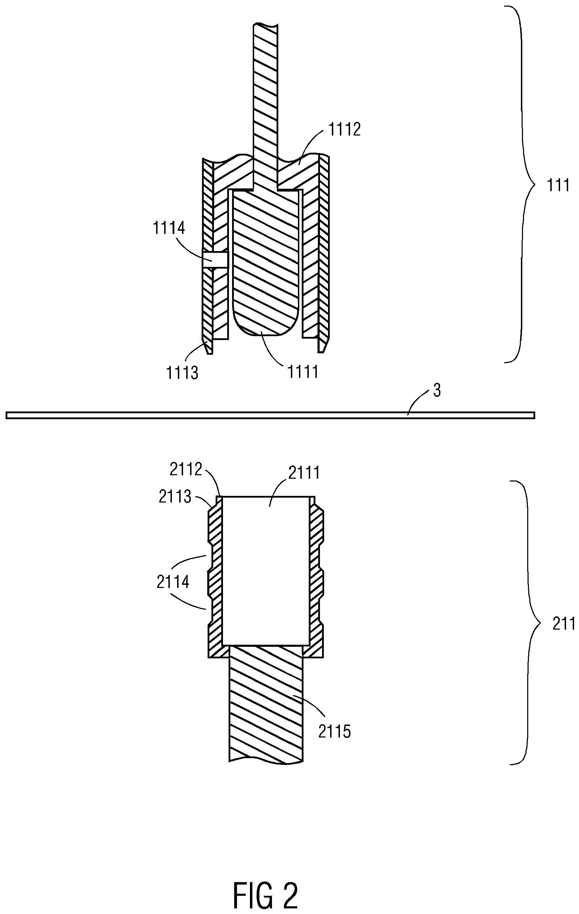

Der prinzipielle Aufbau eines solchen Werkzeuges ist in stark schematisierter Form in den Figuren 1 und 2 veranschaulicht.

Wie aus der Figur 1 ersichtlich ist, besteht das Werkzeug aus zwei (nicht miteinander verbundenen) Hälften, genauer gesagt aus einer oberen Werkzeughälfte 1 und einer unteren Werkzeughälfte 2.

Die obere Werkzeughälfte 1 weist an ihrer im Betrieb der unteren Werkzeughälfte 2 zugewandten Seite eine Vielzahl von Ausnehmungen 11 auf, in welche in der Figur 2 gezeigte Anordnungen 111 eingesetzt sind. Im in der Figur 1 gezeigten Beispiel sind die Ausnehmungen 11 in einer 4 Reihen und 5 Spalten umfassenden Matrix angeordnet. Die Anzahl der Ausnehmungen 11 und deren Anordnung innerhalb der oberen Werkzeughälfte 1 können aber auch beliebig anders gewählt werden.

An zwei einander gegenüberliegenden Seiten der oberen Werkzeughälfte 1 sind darüber hinaus Zentrierstifte 12 vorgesehen. Im in der Figur 1 gezeigten Beispiel sind zwei, jeweils drei in einer Reihe nebeneinander angeordnete Zentrierstifte 12 umfassende Zentrierstift-Reihen vorgesehen. Die Anzahl der Zentrierstifte 12 und deren Anordnung innerhalb der oberen Werkzeughälfte 1 können aber auch beliebig anders gewählt werden.

Die untere Werkzeughälfte 2 weist an ihrer im Betrieb der oberen Werkzeughälfte 1 zugewandten Seite eine Vielzahl von Ausnehmungen 21 auf, in welche in der Figur 2 gezeigte Anordnungen 211 eingesetzt sind. Die Anzahl und die Anordnung der Ausnehmungen 21 entsprechen der Anzahl und der Anordnung der Ausnehmungen 11 des oberen Werkzeugteils 1, so daß beim bestimmungsgemäßen Aufsetzen der oberen Werkzeughälfte 1 auf die untere Werkzeughälfte 2 die Ausnehmungen 11 und 21 bzw. die darin eingesetzten Anordnungen 111 und 211 genau übereinander zu liegen kommen.

An zwei einander gegenüberliegenden Seiten der unteren Werkzeughälfte 2 sind darüber hinaus Zentrierlöcher 22 vorgesehen. Die Anzahl und die Anordnung der Zentrierlöcher 22 entsprechen der Anzahl und der Anordnung der Zentrierstifte 12 der oberen Werkzeughälfte 1, so daß beim bestimmungsgemäßen Aufsetzen der oberen Werkzeughälfte 1 auf die untere Werkzeughälfte 2 die Zentrierstifte 12 in den Zentrierlöchern 22 zu liegen kommen.

Die vorstehend bereits erwähnten, in die Ausnehmungen 11 der oberen Werkzeughälfte 1 eingesetzten Anordnungen 111 umfassen einen Vorstrecker 1111, einen Niederhalter 1112, und eine Schnittplatte 1113.

Der Vorstecker 1111 ist ein kolbenartiges Gebilde, das im Betrieb des Werkzeuges in eine später noch genauer beschriebene Formhülse 2111 der unteren Werkzeughälfte 2 schiebbar ist.

Der Niederhalter 1112 ist ein den Vorstecker 1111 in sich aufnehmendes, aber zur unteren Werkzeughälfte 2 hin offenes Gebilde. Seine Hauptaufgabe besteht darin, eine Kunststoffplatte oder Kunststofffolie 3, die beim bestimmungsgemäßen Einsatz des Werkzeuges zwischen der oberen Werkzeughälfte 1 und der unteren Werkzeughälfte 2 zu liegen kommt, gegen die untere Werkzeughälfte 2, genauer gesagt gegen den oberen Rand der Formhülse 2111 zu drücken und so gegen ein Verschieben oder Verrutschen zu sichern.

Die Schnittplatte 1113 ist eine zumindest das der unteren Werkzeughälfte 2 zugewandte Ende des Niederhalters 1112 seitlich umlaufende Anordnung. Seine Hauptaufgabe besteht darin, die Kunststoffplatte oder Kunststofffolie 3 nach der Durchführung des Thermoformprozeß zu durchtrennen und damit die durch den Thermoformprozeß gleichzeitig hergestellten Gegenstände zu vereinzeln.

Der Niederhalter 1112 und die Schnittplatte 1113 werden seitlich von einem im folgenden als Druckluftleitung bezeichneten Kanal 1114 durchlaufen. Über diese Druckluftleitung 1114 kann in den den Vorstrecker 1112 aufnehmenden Bereich des Niederhalters 1112 Druckluft eingeblasen werden (und von dort seitlich am Niederhalter 1112 vorbei in die Formhülse 2111 gelangen) .

Die in die Ausnehmungen 21 der unteren Werkzeughälfte 2 eingesetzten Anordnungen 211 umfassen die vorstehend bereits erwähnte Formhülse 2111, und einen Auswerfer 2115.

Die Form der Formhülse 2111 hängt von der Form ab, in welche die Kunststofffolie oder Kunststoffplatte 3 durch den Thermoformprozeß zu bringen ist. Die Innenkontur der Formhülse entspricht der Außenkontur des durch den Thermoformprozeß herzustellenden Gegenstandes. In der in der Figur 2 gezeigten Anordnung ist die Formhülse 2111 ein becherförmiges Gebilde, dessen offene Seite der oberen Werkzeughälfte 1 zugewandt ist. Die Formhülse 2111 weist an ihrer offenen Seite einen umlaufenden oberen Rand 2112 auf. Dieser obere Rand 2112 ist derjenige Teil der unteren Werkzeughälfte 2, gegen welchen der Niederhalter 1112 der oberen Werkzeughälfte 1 die Kunststoffplatte oder Kunststofffolie 3 während des Thermoformprozesses drückt und damit gegen ein Verschieben oder Verrutschen sichert. Kurz unterhalb des oberen Randes 2112 wird der Außendurchmesser der Formhülse 2111 größer (gleich dem Innendurchmesser der Ausnehmungen 21). Die an dieser Stelle vorhandene Stufe wird als ein Schnittstempel 2113 verwendet, gegen welchen die Schnittplatte 1113 während des Durchtrennens der Kunststoffplatte oder Kunststofffolie 3 drückt. Unterhalb des Schnittstempels 2113 sind außen in der Seitenwand der Formhülse ein oder mehrere die Formhülse umlaufende Einbuchtungen 2114 ausgebildet, die im Zusammenwirken mit der die Aussparung 21 seitlich begrenzenden Wand Kühlmittelleitungen bilden, durch welche im Betrieb des Werkzeuges ein die Formhülse kühlendes Kühlmittel (beispielsweise Wasser) gepumpt wird.

Der Auswerfer 2115 ist eine in Längsrichtung bewegbare Stange, die den durch den Thermoformprozeß hergestellten Gegenstand nach der Herstellung und Vereinzelung desselben nach oben aus der Formhülse 2111 herausschiebt.

Die Werkzeughälften 1 und 2 sind in eine in den Figuren 1 und 2 nicht gezeigte Thermoformmaschine eingebaut und können durch diese relativ zueinander bewegt werden. Die durch die Thermoformmaschine durchgeführte Bewegung der Werkzeughälften 1 und 2 besteht im wesentlichen in einem wiederholten Aufsetzen der oberen Werkzeughälfte 1 auf die untere Werkzeughälfte 2. Darüber hinaus veranlaßt die Thermoformmaschine auch die für den Thermoformprozeß erforderlichen Bewegungen des Vorstreckers 1111, des Niederhalters 1112, der Schnittplatte 1113, und des Auswerfers 2115, sowie das Einblasen von Druckluft über die Druckluftleitung 1114, und das Pumpen des Kühlmittels durch die Kühlmittelleitungen 2114.

Durch das in den Figuren 1 und 2 gezeigte Werkzeug, genauer gesagt durch die dieses Werkzeug enthaltende Thermoformmaschine lassen sich aus einem flächenförmigen Kunststoff Gegenstände mit einer der Innenkontur der Formhülse 2111 entsprechenden Außenkontur herstellen. Die Herstellung eines solchen (wunschgemäß geformten) Gegenstandes läuft dabei wie nachfolgend beschrieben ab. Vorab sei hierzu angemerkt, daß im Folgenden die Herstellung von nur einem einzigen wunschgemäß geformten Gegenstand beschrieben wird. Durch den beschriebenen Herstellungszyklus werden jedoch gleichzeitig mehrere wunschgemäß geformte Gegenstände hergestellt, genauer gesagt gleichzeitig eine der Anzahl der Ausnehmungen 11 bzw. 21 entsprechende Anzahl von Gegenständen hergestellt.

Ein Herstellungszyklus beginnt damit, daß im voneinander wegbewegten Zustand der Werkzeughälften 1 und 2 auf der unteren Werkzeughälfte 2 oder knapp darüber eine üblicherweise bis zu 2,5 mm dicke Kunststoffplatte oder Kunststofffolie 3 angeordnet wird. Die Kunststoffplatte oder Kunststofffolie 3 muß eine so hohe Temperatur aufweisen, daß sie bei der durch den Thermoformprozeß erfolgenden Verformung derselben nicht reißt. Damit die Kunststoffplatte oder Kunststofffolie 3 eine solche Temperatur aufweist, wird sie vorher entsprechend erwärmt, oder wird eine gerade erst hergestellte und noch nicht oder jedenfalls nicht vollständig abgekühlte Kunststoffplatte oder Kunststofffolie 3 verwendet. Anschließend wird die obere Werkzeughälfte 1 auf die untere Werkzeughälfte 2 aufgesetzt. Dabei werden die obere Werkzeughälfte 1 und die untere Werkzeughälfte 2 durch die Zentrierstifte 12 und die diese aufnehmenden Zentrierlöcher 22 automatisch exakt zueinander ausgerichtet. Anschließend wird der Niederhalter 1112 zur unteren Werkzeughälfte 2 bewegt, wodurch die Kunststoffplatte oder Kunststofffolie 3 zwischen dem Niederhalter 1112 und dem oberen Rand 2112 der Formhülse 2111 eingeklemmt und gegen ein Verschieben oder Verrutschen gesichert wird. Gleichzeitig dringt die Schnittplatte 1113 ein Stück in die Kunststoffplatte oder Kunststofffolie 3 ein, ohne diese jedoch ganz zu durchschneiden. Dadurch ist die Kunststoffplatte oder Kunststofffolie 3 noch sicherer gegen ein Verschieben oder Verrutschen gesichert. Anschließend wird der Vorstrecker 1111 in die Formhülse 2111 geschoben. Auf dem Weg dorthin trifft er auf die Kunststoffplatte oder Kunststofffolie 3 und drückt diese in die Formhülse. Die Kunststoffplatte oder Kunststofffolie 3 wird hierbei entsprechend verformt, genauer gesagt entsprechend gedehnt, ohne jedoch zu reißen. Der Vorstrecker 1111 füllt den Innenraum der Formhülse 2111 nicht vollständig aus, so daß der Kunststoff noch nicht an der Innenseite der Formhülse anliegt und mithin noch nicht die gewünschte Form aufweist. Deshalb wird im Anschluß daran über die Druckluftleitung 1114 Druckluft in die Formhülse 2111 eingeblasen. Die Druckluft kann seitlich am Vorstrecker 1111 vorbeiströmen, da dessen Außendurchmesser kleiner als der Innendurchmesser der Formhülse 2111 (und auch kleiner als der Innendurchmesser des Niederhalters 1112) ist. Durch die in die Formhülse gelangende Druckluft wird der Kunststoff gegen die Innenfläche der Formhülse gedrückt und nimmt dadurch die gewünschte Form an. Nachdem dies geschehen wird, wird der Kunststoff durch die Schnittplatte 1113 und den Schnittstempel 2113 vollständig durchtrennt. Anschließend werden der Vorstrecker 1111, der Niederhalter 1112 und gegebenenfalls auch die Schnittplatte 1113 in die obere Werkzeughälfte 1 zurückgezogen, und die obere Werkzeughälfte 1 von der unteren Werkzeughälfte 2 entfernt. Nachdem dies geschehen ist, wird der Auswerfer 2115 von unten in die Formhülse 2111 geschoben. Dadurch wird der durch den Thermoformprozeß hergestellte und noch in der Formhülse 2111 befindliche Gegenstand nach oben aus der Formhülse herausgeschoben. Nach dem Abtransport desselben und des davon abgetrennten Restes der Kunststoffplatte oder Kunststoffolie 3 ist ein Zyklus beendet, und können sich die vorstehend beschriebenen Vorgänge wiederholen.

Die Zykluszeit beträgt bei modernen Thermoformmaschinen beispielsweise ca. 1,5 s. Somit lassen sich durch einen Thermoformprozeß auf relativ einfache Weise in kurzer Zeit viele wunschgemäß geformte Gegenstände herstellen.

Allerdings ist es nicht ganz einfach, die Thermoformmaschine so einzustellen, daß die damit hergestellten Gegenstände eine optimale Qualität aufweisen. Die Qualität der hergestellten Gegenstände hängt von einer Vielzahl von Faktoren ab, beispielsweise von der Temperatur der Kunststoffplatte oder Kunststofffolie 3, von der Ausrichtung der Werkzeughälften 1 und 2, von der Kraft, mit welcher der Niederhalter 1112 nach unten gedrückt wird, von der Geschwindigkeit, mit welcher der Vorstrecker 1111 in die Formhülse 2111 bewegt wird, vom Druck der über die Druckluftleitung 1114 zugeführten Druckluft, von der Temperatur des die Kühlmittelleitungen 2114 durchströmenden Kühlmittels, etc.. Wenn nicht alle dieser und/oder weiterer Parameter optimal eingestellt sind, kann dies zu einer verminderten Qualität der durch die Thermoformmaschine hergestellten Gegenstände führen. Diese können dann beispielsweise Löcher, Risse, eine zu geringe oder eine ungleichmäßige Materialstärke, und/oder eine von der gewünschten Form abweichende Form aufweisen. Aufgrund der Vielzahl der veränderbaren Parameter ist es jedoch alles andere als einfach, die optimalen Einstellungen (die optimale Einstellungs-Kombination) zu finden. Bei herkömmlichen Thermoformmaschinen kann im wesentlichen nur durch eine Begutachtung der durch die Thermoformmaschine hergestellten Gegenstände festgestellt werden, ob die einstellbaren Parameter richtig eingestellt sind. Dies erfordert in der Regel die Durchführung einer Vielzahl von Versuchsreihen und ist entsprechend kompliziert und zeitaufwendig. Hinzu kommt, daß die Auswirkungen bestimmter Fehleinstellungen den durch die Thermoformmaschine hergestellten Gegenständen nicht anzusehen sind. Beispielsweise hat es zunächst keine negativen Auswirkungen auf die durch die Thermoformmaschine hergestellten Gegenstände, wenn die Kraft, mit welcher der Niederhalter 1112 nach unten gedrückt wird, zu groß ist. Zumindest bei längerem Betrieb der Thermoformmaschine mit einer solchen Fehleinstellung werden dadurch jedoch der Niederhalter 1112 und/oder die Formhülse 2111 beschädigt, was eine verkürzte Lebensdauer des Werkzeuges oder häufigere Reparatur- und Wartungsarbeiten zur Folge hat.

Aus der DE 101 29 392 A1 ist ein Werkzeug gemäß dem Oberbegriff des Patentanspruchs 1 bekannt. In der im Werkzeug enthaltenen Speichereinrichtung sind Daten gespeichert, die zur Kennung des Werkzeuges dienen und/oder Sollwerte für die automatische Einstellung von verstellbaren Maschinenparametern beinhalten. Da die optimale Einstellung von verstellbaren Maschinenparametern jedoch nicht nur vom betreffenden Werkzeug, sondern beispielsweise auch von den Einsatzbedingungen, vom Alter und vom Pflegezustand des Werkzeuges abhängen, sind die in der Speichereinrichtung gespeicherten Sollwerte für die automatische Einstellung von verstellbaren Maschinenparametern wohl in den seltensten Fällen für eine optimale Einstellung der verstellbaren Maschinenparameter geeignet. Damit steht man letztlich vor dem selben Problem wie bei dem vorstehend beschriebenen Thermoformwerkzeug.

Der vorliegenden Erfindung liegt daher die Aufgabe zugrunde, das Werkzeug gemäß dem Oberbegriff des Patentanspruchs 1 derart weiterzubilden, daß sich die Einstellung der veränderbaren Parameter einfacher, schneller und besser vornehmen läßt als es bisher der Fall ist.

Diese Aufgabe wird erfindungsgemäß durch das in Patentanspruch 1 beanspruchte Werkzeug gelöst.

In einer vorzugsweise nichtflüchtigen und wiederholt umprogrammierbaren Speichereinrichtung können Informationen gespeichert sein, die die optimale Einstellung der einstellbaren Parameter erleichtern oder überhaupt erst ermöglichen.

Zu diesen Informationen gehören beispielsweise Informationen über den Aufbau des Werkzeuges, wie etwa Informationen darüber, wie viele und welche Art von Sensoren im Werkzeug enthalten sind. Das Auslesen und Auswerten dieser Informationen aus der Speichereinrichtung ermöglicht es, daß die von den Sensoren erfaßten Größen automatisch erfaßt, ausgewertet, und angezeigt werden, wodurch der Bediener der das Werkzeug enthaltenden Maschine einen umfassenden und genauen Überblick über die im Werkzeug herrschenden Verhältnisse und ablaufenden Vorgänge erhalten und die am Werkzeug oder an der das Werkzeug enthaltenden Maschine einstellbaren Parameter ohne viele Versuchsreihen, also schnell und einfach optimal, und zwar wirklich optimal einstellen kann. Insbesondere wenn in der Speichereinrichtung auch Informationen über empfohlene und/oder früher verwendete Werte für die am Werkzeug oder an der das Werkzeug enthaltenden Maschine einstellbaren Parameter gespeichert sind, besteht sogar die Möglichkeit, daß eine die Anlage steuernde Steuereinrichtung die veränderbaren Parameter automatisch selbständig optimal einstellt und auf dem eingestellten Wert hält.

Weitere Informationen, deren Speicherung in der Speichereinrichtung sich als vorteilhaft erweist, sind Informationen über die zulässige Belastbarkeit des Werkzeuges, beispielsweise Informationen über die maximale Kraft, mit welcher der Niederhalter nach unten gedrückt werden darf, oder die maximal zulässige Temperatur des Werkzeuges oder bestimmter Komponenten desselben. Durch eine Einstellung der einstellbaren Parameter unter Berücksichtigung dieser Informationen kann verhindert werden, daß das Werkzeug aufgrund von Fehleinstellungen beschädigt wird.

Vorteilhaft ist es auch, wenn in der Speichereinrichtung Informationen über die bei der Benutzung des Werkzeuges im Werkzeug auftretenden oder auf das Werkzeug wirkenden Temperaturen und/oder Kräfte und/oder Drücke und/oder Positionen und/oder Geschwindigkeiten und/oder Beschleunigungen gespeichert sind. Das Auslesen und Auswerten dieser Informationen vereinfacht und verbilligt die Wartung des Werkzeuges. Beispielsweise ist es nicht erforderlich, zu überprüfen,
- ob das Werkzeug aufgrund einer zu hohen Temperatur verzogen ist, wenn die Temperatur des Werkzeuges nie über der zulässigen Maximaltemperatur lag, oder
- ob das Werkzeug aufgrund einer zu hohen Kraft oder eines zu hohen Druckes verborgen ist, wenn die betreffenden Kräfte oder Drücke nie über den zulässigen Maximalwerten lagen.

Darüber hinaus kann der Hersteller des Werkzeuges anhand dieser Informationen erkennen, ob ein innerhalb des Garantiezeitraumes aufgetretener Schaden auf einen Herstellungsfehler oder eine unsachgemäße Benutzung des Werkzeuges zurückzuführen ist.

Vorteilhaft ist ferner, wenn in der Speichereinrichtung Informationen über erfolgte Wartungs- und Reparaturarbeiten am Werkzeug gespeichert sind. Das Auslesen und Auswerten dieser Informationen ermöglicht es, zu erkennen, daß bestimmte Wartungs- oder Reparaturarbeiten nicht mehr möglich sind, beispielsweise daß bei früher durchgeführten Schärfungen der Schneide der Schnittplatte bereits so viel Material von der Schneide abgetragen wurde, daß ein erneutes Schärfen derselben nicht mehr möglich ist. Somit kann der Reparatur- oder Wartungsbetrieb ohne eine vorherige Vermessung des Werkzeuges erkennen, wie er das zu reparierende oder zu wartende Werkzeug zu behandeln hat. Darüber hinaus steht damit auch dem Besitzer des Werkzeuges eine jederzeit abrufbare Information zur Verfügung, aus welcher er ermitteln kann, wann er mit größeren Reparaturen am Werkzeug oder der Anschaffung eines neuen Werkzeuges rechnen muß.

Es dürfte einleuchten und bedarf keiner näheren Erläuterung, daß es neben den vorstehend genannten Informationen auch noch eine Vielzahl weiterer Informationen gibt, deren Speicherung in der Speichereinrichtung vorteilhaft ist.

Dadurch, daß die Auswahl der in die Speichereinrichtung zu schreibenden Daten durch eine im Werkzeug integrierte Schaltung erfolgt, kann erreicht werden, daß nicht ständig alle verfügbaren Daten, sondern nur jeweils die aktuell wirklich interessierenden Daten in die Speichereinrichtung geschrieben werden. Eine solche Beschränkung der in die Speichereinrichtung geschriebenen Daten ermöglicht es, daß die zum Einschreiben in die Speichereinrichtung ausgewählten Daten in kürzeren zeitlichen Abständen in die Speichereinrichtung geschrieben werden können und länger gespeichert werden können, bevor sie aus Mangel an Speicherplatz wieder gelöscht werden müssen. Darüber hinaus wird durch die weniger häufigen Datenspeichervorgänge die Wahrscheinlichkeit verringert, daß die Speichereinrichtung vor dem Ende der Lebensdauer des Werkzeuges ausfällt und damit alle bis dahin gespeicherten Daten unwiederbringlich verloren gehen.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher beschrieben. Es zeigen
- Figur 1: eine schematische Ansicht des Aufbaus eines Thermoformwerkzeuges, und
- Figur 2: eine detailliertere Darstellung bestimmter Komponenten des in der Figur 1 gezeigten Werkzeuges.

Das im folgenden näher beschriebene Werkzeug ist ein Thermoformwerkzeug. Die nachfolgend näher beschriebenen Besonderheiten des Thermoformwerkzeuges können aber auch bei beliebigen anderen Werkzeugen zum Einsatz kommen, durch welche ein flächenförmiges Material in eine vorgegebene andere Form bringbar ist. Ein solches andere Werkzeug ist beispielsweise ein sogenanntes Bandschnittwerkzeug.

Das hier vorgestellte Thermoformwerkzeug ist im wesentlichen wie das in den Figuren 1 und 2 gezeigte und eingangs unter Bezugnahme hierauf beschriebene Thermoformwerkzeug aufgebaut. Im Unterschied zu dem in den Figuren 1 und 2 gezeigten Thermoformwerkzeug und sonstigen herkömmlichen Thermoformwerkzeugen enthält es jedoch eine Speichereinrichtung zum Speichern von Daten, insbesondere zum Speichern von Informationen über das die Speichereinrichtung enthaltende Werkzeug. Die Speichereinrichtung ist eine fest und dauerhaft in das Werkzeug eingebaute Speichereinrichtung und wird stets mit dem Werkzeug mitgeführt. Im betrachteten Beispiel ist die Speichereinrichtung Bestandteil der unteren Werkzeughälfte 2. Sie könnte aber auch in der oberen Werkzeughälfte 1 untergebracht sein.

Die Speichereinrichtung ist vorzugsweise eine nichtflüchtige, wiederholt umprogrammierbare Speichereinrichtung wie beispielsweise ein Flash-Speicher. Es könnte sich aber auch um eine beliebige andere Speichereinrichtung handeln.

Die in der Speichereinrichtung gespeicherten Informationen über das die Speichereinrichtung enthaltende Werkzeug können die unterschiedlichsten Informationen sein, beispielsweise
- Informationen über den Aufbau des Werkzeuges (beispielsweise Informationen über die Anzahl der durch das Thermoformwerkzeug gleichzeitig herstellbaren Gegenstände, und/oder Informationen über die Größe, insbesondere die Höhe des Innenraumes der Formhülsen, Informationen über die Anzahl und die Art der im Werkzeug vorhandenen Sensoren, etc.), und/oder
- Informationen über beispielsweise vom Werkzeughersteller vorgeschlagene oder bei einer früheren Benutzung des Werkzeuges verwendete Werte für die am Werkzeug oder an der das Werkzeug enthaltenden Maschine einstellbaren Parameter, und/oder
- Informationen über die Belastbarkeit des Werkzeuges (beispielsweise Informationen über die maximal zulässigen Temperaturen und/oder Kräfte und/oder Drücke und/oder Positionen und/oder Geschwindigkeiten und/oder Beschleunigungen, die im Werkzeug auftreten oder auf das Werkzeug wirken, etc.), und/oder
- Informationen über erfolgte Belastungen des Werkzeuges (beispielsweise Informationen über die maximalen oder durchschnittlichen Temperaturen und/oder Kräfte und/oder Drücke und/oder Positionen und/oder Geschwindigkeiten und/oder Beschleunigungen, die bei den bisherigen Benutzungen des Werkzeuges im Werkzeug auftraten oder auf das Werkzeug wirkten, etc.), und/oder
- Informationen über den bisherigen Umfang und/oder über den zu erwartenden maximalen Umfang der Benutzung des Werkzeuges (beispielsweise Informationen über die Häufigkeit und/oder die Dauer der Benutzung des Werkzeuges, etc.), und/oder
- Informationen über erfolgte Wartungen oder Reparaturen des Werkzeuges (beispielsweise Informationen über den Zeitpunkt der Wartungen oder Reparaturen, und/oder die durchgeführten Arbeiten, z.B. wieviel Material von der Schnittplatte 1113 und/oder vom Schnittstempel 2113 beim Nachschleifen derselben abgetragen wurde, etc.), und/oder
- beliebige sonstige Informationen, die für die Verwendung, die Wartung, die Reparatur, oder die Weiterentwicklung des Werkzeuges von Interesse sein könnten.

Die vorstehend genannten Informationen werden im betrachteten Beispiel durch eine ebenfalls im Werkzeug untergebrachte Schaltung in die Speichereinrichtung geschrieben und aus dieser ausgelesen. Es sei jedoch bereits an dieser Stelle darauf hingewiesen, daß das Beschreiben und/oder das Auslesen der Speichereinrichtung zusätzlich oder alternativ auch durch eine außerhalb des Werkzeuges vorgesehene Schaltung erfolgen könnte. Diese außerhalb des Werkzuges vorgesehene Schaltung kann Bestandteil der das Werkzeug enthaltenden Maschine sein, oder auch eine außerhalb der Maschine vorgesehene Schaltung (beispielsweise ein externer Computer) sein.

Die im Werkzeug untergebrachte Schaltung ist vorzugsweise in der selben Werkzeughälfte untergebracht wie die Speichereinrichtung.

Die Schaltung enthält im betrachteten Beispiel einen Mikrocontroller oder eine sonstige programmgesteuerte Einheit wie beispielsweise einen Mikroprozessor oder einen Signalprozessor, und kann daher auch weitere Aufgaben übernehmen als das Beschreiben und Auslesen der Speichereinrichtung.

Diese weiteren Aufgaben umfassen im betrachteten Beispiel unter anderem das Erfassen und Auswerten der Ausgangssignale von im Werkzeug vorgesehenen Sensoren zur Erfassung der sich im Werkzeug einstellenden Verhältnisse oder ablaufenden Vorgänge.

Die im Werkzeug enthaltenen Sensoren, deren Ausgangssignale durch den Mikrocontroller erfaßt und ausgewertet werden, umfassen im betrachteten Beispiel einen oder mehrere Temperatursensoren und einen Dehnungsmeßstreifen. Der Vollständigkeit halber sei darauf hingewiesen, daß im Werkzeug auch noch beliebige weitere oder andere, oder an anderen Stellen als vorliegend angeordnete Sensoren zur Erfassung der sich im Werkzeug einstellenden Verhältnisse oder ablaufenden Vorgänge untergebracht sein können.

Die Temperatursensoren sind in einem, mehreren, oder allen Schnittstempeln 2113 untergebrachte Sensoren, und dienen zur Erfassung der dort herrschenden Temperaturen. Die Anordnung der Temperatursensoren in den Schnittstempeln 2113 erweist sich als besonders vorteilhaft, weil diese Sensoren dadurch nicht nur die Temperatur der Formhülse 2111 liefern, sondern auch Rückschlüsse auf die Temperatur der zumindest beim Durchtrennen der Kunststoffplatte oder Kunststofffolie 3 mit den Schnittstempeln 2113 in Kontakt kommenden Kunststoffplatte oder Kunststofffolie 3 zulassen. Die Temperatur der Kunststoffplatte oder Kunststofffolie 3 könnte aber auch durch in die Schnittplatten 1113 integrierte Temperatursensoren erfaßt werden.

Der Dehnungsmeßstreifen ist an der Oberfläche der unteren Werkzeughälfte 2 (oder der oberen Werkzeughälfte 1) angeordnet und dient zur Erfassung von Verwindungen oder Vibrationen der unteren Werkzeughälfte 2 (oder der oberen Werkzeughälfte 1), die zum Beispiel beim Aufsetzen der oberen Werkzeughälfte 1 auf die untere Werkzeughälfte 2 entstehen können, wenn die Werkzeughälfte nicht exakt aufeinander ausgerichtet sind und/oder ein zu heftiges Aufsetzen der oberen Werkzeughälfte 1 auf die untere Werkzeughälfte 2 erfolgt.

Der Mikrocontroller
- erfaßt die von den im Werkzeug enthaltenen Sensoren ausgegebenen Signale,
- wertet diese aus,
- überprüft, ob Informationen in die Speichereinrichtung geschrieben werden müssen, und
- schreibt entweder die Ausgangssignale der Sensoren selbst und/oder unter Berücksichtigung der Ausgangssignale der Sensoren gebildete Daten (beispielsweise einen aktualisierten Durchschnittswert) in die Speichereinrichtung.

Dem Mikrocontroller können auch Ausgangssignale von nicht im Werkzeug vorgesehenen Sensoren, beispielsweise von in der das Werkzeug enthaltenden Maschine vorgesehenen Sensoren zur Erfassung, Auswertung und Speicherung zugeführt werden.

Im betrachteten Beispiel sind in der das Werkzeug enthaltenden Maschine
- ein Sensor zur Erfassung der Position des Vorstreckers 1111 (zur Ermittlung des Position und/oder der Bewegungsgeschwindigkeit des Vorstreckers 1111),
- ein Sensor zur Erfassung des Drucks der über die Druckluftleitung 1114 in die Formhülse 2111 geleiteten Druckluft,
- ein Sensor zur Erfassung des Druckes, mit welchem der (im betrachteten Beispiel durch Druckluft bewegte) Niederhalter 1112 nach unten gedrückt wird, und
- ein Sensor zur Erfassung der Position des Niederhalters 1112 (zur Ermittlung des Position und/oder der Bewegungsgeschwindigkeit des Niederhalters 1112)
vorgesehen.

Der Vollständigkeit halber sei angemerkt, daß in der das Werkzeug enthaltenden Maschine auch weitere und/oder andere Sensoren vorgesehen sein können.

Der Mikrocontroller kann bei Bedarf auch die von den in der Maschine vorgesehenen Sensoren ausgegebenen Signale erfassen, auswerten und in der Speichereinrichtung speichern. Die hierbei vom Mikrocontroller ausgeführten Aktionen können die selben Aktionen sein wie bei der Erfassung, Auswertung, und Speicherung der Ausgangssignale der im Werkzeug enthaltenen Sensoren.

Der Mikrocontroller ist vorzugsweise von außerhalb des Werkzeuges steuerbar. Er kann durch eine außerhalb des Werkzeuges vorgesehene externe Steuereinrichtung veranlaßt werden, ihm von dieser Steuereinrichtung zugeführte Daten in die Speichereinrichtung zu schreiben, und in der Speichereinrichtung gespeicherte Daten auszulesen und an die externe Steuereinrichtung auszugeben. Die externe Steuereinrichtung kann beispielsweise eine in der Maschine vorgesehene, die Maschine steuernde Steuereinrichtung oder ein externer Computer sein. Es kann auch vorgesehen werden, daß der Mikrocontroller sowohl mit der die Maschine steuernden Steuereinrichtung als auch mit einem externen Computer oder einer sonstigen externen Steuereinrichtung verbunden ist. Die Verbindung zwischen dem Mikrocontroller und der externen Steuereinrichtung erfolgt über ein Netzwerk und/oder über dedizierte Direktverbindungen.

Wenn der Mikrocontroller mit einer externen Steuereinrichtung, insbesondere wenn der Mikrocontroller mit einer die Maschine steuernden Steuereinrichtung verbunden ist, kann vorgesehen werden, daß diese Steuereinrichtung die Erfassung und Auswertung der Ausgangssignale der in der Maschine enthaltenen Sensoren vornimmt. Der im Werkzeug vorgesehene Mikrocontroller würde dadurch von dieser Aufgabe befreit werden und müßte dann in Bezug auf die in der Maschine vorgesehenen Sensoren nur noch die Speicherung der ihm von der externen Steuereinrichtung zugeführten Daten durchführen.

Es könnte aber auch vorgesehen werden, daß die externe Steuereinrichtung auch die Ausgangssignale der im Werkzeug vorgesehenen Sensoren auswertet. In diesem Fall würden sich die Aufgaben des im Werkzeug vorgesehenen Mikrocontrollers darauf beschränken,
- daß er die Ausgangssignale der im Werkzeug vorgesehenen Sensoren erfaßt und an die externe Steuereinrichtung weiterleitet, und
- daß er die Speichereinrichtung auf Veranlassung durch die externe Steuereinrichtung beschreibt und ausliest.

Je umfangreicher die von der externen Steuereinrichtung übernommenen Aufgaben sind, desto mehr wird der im Werkzeug vorgesehenen Mikrocontroller entlastet, und desto weniger leistungsfähig muß dieser sein. Dies erweist sich als vorteilhaft, weil dann nur die externe Steuereinrichtung eine hohe Leistungsfähigkeit aufweisen muß, und in die Werkzeuge leistungsschwächere und entsprechend billigere Mikrocontroller eingebaut werden können.

Vorzugsweise wird bei der Auswertung der Ausgangssignale der im Werkzeug und in der Maschine vorhandenen Sensoren überwacht, ob diese (beispielsweise in der Speichereinrichtung gespeicherte) zugeordnete Maximalwerte übersteigen. Wenn hierbei festgestellt wird, daß ein oder mehrere Maximalwerte überschritten werden, wird ein Alarm ausgegeben und/oder der zu hohe Wert automatisch heruntergeregelt, und/oder die Maschine in einen definierten Zustand gebracht, und/oder die Maschine angehalten oder abgeschaltet. Der Alarm kann auf einer am Werkzeug und/oder einer an der externen Steuereinrichtung vorgesehenen Anzeigeeinrichtung angezeigt werden, und/oder über einen am Werkzeug und/oder einen an der externen Steuereinrichtung vorgesehenen akustischen Signalgeber signalisiert werden, und/oder über eine über ein Telekommunikationsnetz versandte Sprachnachricht oder Textnachricht oder auf beliebige sonstige Art und Weise signalisiert werden.

Die am Werkzeug und/oder an der Maschine vorgesehene Anzeigeeinrichtung kann auch für andere Zwecke als zur Alarmsignalisierung verwendet werden, beispielsweise zur Anzeige der aktuell von den Sensoren erfaßten Werte und/oder zur Anzeige der in der Speichereinrichtung gespeicherten Informationen.

Das Vorsehen der vorstehend beschriebenen Speichereinrichtung im Werkzeug erweist sich als sehr vorteilhaft.

In der Speichereinrichtung können beispielsweise Informationen gespeichert sein, die die optimale Einstellung der veränderbaren Parameter des Thermoformprozesses erleichtern oder überhaupt erst ermöglichen.

Zu diesen Informationen gehören beispielsweise Informationen über den Aufbau des Werkzeuges, wie etwa Informationen darüber, wie viele und welche Art von Sensoren im Werkzeug enthalten sind. Das Auslesen und Auswerten dieser Informationen aus der Speichereinrichtung ermöglicht es, daß die von den Sensoren erfaßten Größen automatisch erfaßt, ausgewertet, und angezeigt werden können, wodurch der Bediener der das Werkzeug enthaltenden Maschine einen umfassenden und genauen Überblick über die im Werkzeug herrschenden Verhältnisse und ablaufenden Vorgänge erhalten und die am Werkzeug oder an der das Werkzeug enthaltenden Maschine einstellbaren Parameter ohne viele Versuchsreihen, also schnell und einfach optimal, und zwar wirklich optimal einstellen kann. Insbesondere wenn in der Speichereinrichtung auch Informationen über empfohlene und/oder früher verwendete Werte für die am Werkzeug oder an der das Werkzeug enthaltenden Maschine einstellbaren Parameter gespeichert sind, besteht sogar die Möglichkeit, daß eine die Anlage steuernde Steuereinrichtung die veränderbaren Parameter automatisch selbstständig optimal einstellt und auf dem eingestellten Wert hält.

Weitere Informationen, deren Speicherung in der Speichereinrichtung sich als vorteilhaft erweist, sind Informationen über die zulässige Belastbarkeit des Werkzeuges, beispielsweise Informationen über die maximale Kraft, mit welcher der Niederhalter nach unten gedrückt werden darf, oder die maximal zulässige Temperatur des Werkzeuges oder bestimmter Komponenten desselben. Durch eine Einstellung der einstellbaren Parameter unter Berücksichtigung dieser Informationen kann verhindert werden, daß das Werkzeug aufgrund von Fehleinstellungen beschädigt wird.

Vorteilhaft ist es auch, wenn in der Speichereinrichtung Informationen über die bei der Benutzung des Werkzeuges im Werkzeug auftretenden oder auf das Werkzeug wirkenden Temperaturen und/oder Kräfte und/oder Drücke und/oder Positionen und/oder Geschwindigkeiten und/oder Beschleunigungen gespeichert sind. Das Auslesen und Auswerten dieser Informationen vereinfacht und verbilligt die Wartung des Werkzeuges. Beispielsweise ist es nicht erforderlich, zu überprüfen,
- ob das Werkzeug aufgrund einer zu hohen Temperatur verzogen ist, wenn die Temperatur des Werkzeuges nie über der zulässigen Maximaltemperatur lag, oder
- ob das Werkzeug aufgrund einer zu hohen Kraft oder eines zu hohen Druckes verborgen ist, wenn die betreffenden Kräfte oder Drücke nie über den zulässigen Maximalwerten lagen.

Darüber hinaus kann der Hersteller des Werkzeuges anhand dieser Informationen erkennen, ob ein innerhalb des Garantiezeitraumes aufgetretener Schaden auf einen Herstellungsfehler oder eine unsachgemäße Benutzung des Werkzeuges zurückzuführen ist.

Vorteilhaft ist ferner, wenn in der Speichereinrichtung Informationen über erfolgte Wartungs- und Reparaturarbeiten am Werkzeug gespeichert sind. Das Auslesen und Auswerten dieser Informationen ermöglicht es, zu erkennen, daß bestimmte Wartungs- oder Reparaturarbeiten nicht mehr möglich sind, beispielsweise daß bei früher durchgeführten Schärfungen der Schneide der Schnittplatte bereits so viel Material von der Schneide abgetragen wurde, daß ein erneutes Schärfen derselben nicht mehr möglich ist. Somit kann der Reparatur- oder Wartungsbetrieb ohne eine vorherige Vermessung des Werkzeuges erkennen, wie er das zu reparierende oder zu wartende Werkzeug zu behandeln hat. Darüber hinaus steht damit auch dem Besitzer des Werkzeuges eine jederzeit abrufbare Information zur Verfügung, aus welcher er ermitteln kann, wann er mit größeren Reparaturen am Werkzeug oder der Anschaffung eines neuen Werkzeuges rechnen muß.

Es dürfte einleuchten und bedarf keiner näheren Erläuterung, daß sich die in der Speichereinrichtung gespeicherten oder speicherbaren Daten auch für andere Zwecke nutzen lassen und das Vorsehen der Speichereinrichtung im Werkzeug entsprechend viele weitere Vorteile bietet.

Zu den vorstehend erwähnten Sensoren im Werkzeug und/oder in der das Werkzeug enthaltenden Maschine sei der Vollständigkeit halber angemerkt, daß deren Vorsehen auch dann von Vorteil ist, wenn die Sensorsignale oder darauf basierende Daten nicht in der vorstehend beschriebenen Speichereinrichtung des Werkzeuges gespeichert werden, oder wenn im Werkzeug überhaupt keine Speichereinrichtung der vorstehend beschriebenen Art vorgesehen ist. Auch das alleinige Vorsehen dieser oder anderer Sensoren ermöglicht eine schnellere und einfachere Einstellung der veränderbaren Parameter und/oder eine automatische Einstellung dieser Parameter durch den im Werkzeug vorgesehenen Mikrocontroller und/oder die externe Steuereinrichtung. Ferner sei der Vollständigkeit halber angemerkt, daß die Sensoren, die im vorstehend beschriebenen Beispiel in der das Werkzeug enthaltenden Maschine vorgesehen sind, auch im Werkzeug untergebracht werden könnten, und daß die Sensoren, die im vorstehend beschriebenen Beispiel im Werkzeug vorgesehen sind, auch in der das Werkzeug enthaltenden Maschine untergebracht werden könnten.

Falls im Werkzeug keine Speichereinrichtung vorgesehen ist, kann unter Umständen auch auf den im Werkzeug vorgesehenen Mikrocontroller verzichtet werden oder der Mikrocontroller durch eine einfachere Schaltung ersetzt werden.

### Bezugszeichenliste

- 1: obere Werkzeughälfte
- 2: untere Werkzeughälfte

- 11: Ausnehmungen in 1
- 12: Zentrierstifte

- 21: Ausnehmungen in 2
- 22: Zentrierlöcher

- 111: in 11 eingesetzte Anordnung
- 211: in 21 eingesetzte Anordnung

- 1111: Vorstrecker
- 1112: Niederhalter
- 1113: Schnittplatte
- 1114: Druckluftleitung

- 2111: Formhülse
- 2112: oberer Rand von 2111
- 2113: Schnittstempel
- 2114: Einbuchtung in 2111
- 2115: Auswerfer

## Patentansprüche

1. Werkzeug, durch welches ein flächenförmiges Material (3) in eine vorgegebene andere Form bringbar ist, wobei im Werkzeug (1, 2) eine Speichereinrichtung zum Speichern von Daten integriert ist, **dadurch gekennzeichnet, daß** im Werkzeug (1, 2) eine Schaltung integriert ist, durch die eine Auswahl der in die Speichereinrichtung zu schreibenden Daten erfolgt.

2. Werkzeug nach Anspruch 1, **dadurch gekennzeichnet, daß** die Speichereinrichtung eine nichtflüchtige Speichereinrichtung ist.

3. Werkzeug nach Anspruch 2, **dadurch gekennzeichnet, daß** die Speichereinrichtung eine wiederholt umprogrammierbare Speichereinrichtung ist.

4. Werkzeug nach Anspruch 1, **dadurch gekennzeichnet, daß** in der Speichereinrichtung Informationen über das die Speichereinrichtung enthaltende Werkzeug (1, 2) speicherbar sind.

5. Werkzeug nach Anspruch 4, **dadurch gekennzeichnet, daß** in der Speichereinrichtung Informationen über den Aufbau des Werkzeuges (1, 2) speicherbar sind.

6. Werkzeug nach Anspruch 4, **dadurch gekennzeichnet, daß** in der Speichereinrichtung Informationen über die Anzahl und die Art von im Werkzeug (1, 2) oder in einer das Werkzeug enthaltenden Maschine integrierten Sensoren speicherbar sind.

7. Werkzeug nach Anspruch 4, **dadurch gekennzeichnet, daß** in der Speichereinrichtung Informationen über vorgeschlagene oder bei einer früheren Benutzung des Werkzeuges (1, 2) verwendete Werte für am Werkzeug oder an einer das Werkzeug enthaltenden Maschine einstellbare Parameter speicherbar sind.

8. Werkzeug nach Anspruch 4, **dadurch gekennzeichnet, daß** in der Speichereinrichtung Informationen über die Belastbarkeit des Werkzeuges (1, 2) speicherbar sind.

9. Werkzeug nach Anspruch 4, **dadurch gekennzeichnet, daß** in der Speichereinrichtung Informationen über erfolgte Belastungen des Werkzeuges (1, 2) speicherbar sind.

10. Werkzeug nach Anspruch 4, **dadurch gekennzeichnet, daß** in der Speichereinrichtung Informationen über den bisherigen Umfang und/oder über den zu erwartenden maximalen Umfang der Benutzung des Werkzeuges (1, 2) speicherbar sind.

11. Werkzeug nach Anspruch 10, **dadurch gekennzeichnet, daß** in der Speichereinrichtung Informationen über die Häufigkeit und/oder die Dauer der Benutzung des Werkzeuges (1, 2) speicherbar sind.

12. Werkzeug nach Anspruch 4, **dadurch gekennzeichnet, daß** in der Speichereinrichtung Informationen über die bei der Benutzung des Werkzeuges (1, 2) im Werkzeug auftretenden oder auf das Werkzeug wirkenden Temperaturen und/oder Kräfte und/oder Drücke und/oder Positionen und/oder Geschwindigkeiten und/oder Beschleunigungen speicherbar sind.

13. Werkzeug nach Anspruch 4, **dadurch gekennzeichnet, daß** im Werkzeug (1, 2) und/oder in einer das Werkzeug enthaltenden Maschine ein oder mehrere Sensoren zur Erfassung der sich im Werkzeug (1, 2) einstellenden Verhältnisse oder ablaufenden Vorgänge eingebaut sind, und daß in der Speichereinrichtung Ausgangssignale der Sensoren und/oder unter Berücksichtigung der Ausgangssignale der Sensoren gebildete Daten speicherbar sind.

14. Werkzeug nach Anspruch 4, **dadurch gekennzeichnet, daß** in der Speichereinrichtung Informationen über erfolgte Wartungen oder Reparaturen des Werkzeuges (1, 2) speicherbar sind.

15. Werkzeug nach Anspruch 1, **dadurch gekennzeichnet, daß** das Beschreiben und das Auslesen der Speichereinrichtung durch die im Werkzeug (1, 2) integrierte Schaltung erfolgt.

16. Werkzeug nach Anspruch 1, **dadurch gekennzeichnet, daß** die Auswahl der in die Speichereinrichtung zu schreibenden Daten und/oder das Beschreiben und das Auslesen der Speichereinrichtung durch eine außerhalb des Werkzeuges (1, 2) vorgesehene Einrichtung erfolgt.

17. Werkzeug nach Anspruch 1, **dadurch gekennzeichnet, daß** das Werkzeug (1, 2) ein Thermoformwerkzeug ist.

18. Werkzeug nach Anspruch 1, **dadurch gekennzeichnet, daß** das Werkzeug (1, 2) ein Bandschnittwerkzeug ist.

19. Werkzeug nach Anspruch 12, **dadurch gekennzeichnet, daß** das Werkzeug (1, 2) eine Schneideeinrichtung (1113, 2113) zum Zerschneiden des flächenförmigen Materials (3) enthält, und daß im Werkzeug oder in der das Werkzeug enthaltenden Maschine ein Temperatursensor zur Erfassung der Temperatur der Schneideeinrichtung vorgesehen ist.

20. Werkzeug nach Anspruch 12, **dadurch gekennzeichnet, daß** das Werkzeug (1, 2) eine die vorgegebene andere Form vorgebende Formhülse (2111) und einen das flächenförmige Material (3) in die Formhülse drückenden Vorstrecker (1111) enthält, und daß im Werkzeug oder in der das Werkzeug enthaltenden Maschine ein Sensor zur Erfassung der Position und/oder der Geschwindigkeit des Vorstreckers vorgesehen ist.

21. Werkzeug nach Anspruch 12, **dadurch gekennzeichnet, daß** das Werkzeug (1, 2) einen Niederhalter (1112) enthält, durch welchen das flächenförmige Material (3) während des Bringens desselben in die vorgegebene andere Form gegen eine Unterlage gedrückt wird, um ein Verrutschen des flächenförmigen Materials zu verhindern, und daß im Werkzeug oder in der das Werkzeug enthaltenden Maschine ein Sensor zur Erfassung der Kraft vorgesehen ist, mit welcher der Niederhalter gegen die Unterlage gedrückt wird.

22. Werkzeug nach Anspruch 12, **dadurch gekennzeichnet, daß** das Werkzeug (1, 2) einen Niederhalter (1112) enthält, durch welchen das flächenförmige Material (3) während des Bringens desselben in die vorgegebene andere Form gegen eine Unterlage gedrückt wird, um ein Verrutschen des flächenförmigen Materials zu verhindern, und daß im Werkzeug oder in der das Werkzeug enthaltenden Maschine ein Sensor zur Erfassung der Position und/oder der Geschwindigkeit des Niederhalters vorgesehen ist.

23. Werkzeug nach Anspruch 12, **dadurch gekennzeichnet, daß** das Bringen des flächenförmigen Materials (3) in die vorgegebene andere Form unter Verwendung von Druckluft erfolgt, und daß im Werkzeug (1, 2) oder in der das Werkzeug enthaltenden Maschine ein Sensor zur Erfassung der Druckes der Druckluft vorgesehen ist.

24. Werkzeug nach Anspruch 12, **dadurch gekennzeichnet, daß** im Werkzeug (1, 2) oder in der das Werkzeug enthaltenden Maschine ein Sensor zur Erfassung der Verwindung oder von Vibrationen des Werkzeuges vorgesehen ist.

## Claims

1. Tool, by means of which a flat material (3) can be changed to a predefined different shape, a memory for storing data being integrated into the tool (1, 2), **characterized in that** a circuit, by means of which a selection of the data to be written to the memory can be made, is integrated in the tool (1, 2).

2. Tool according to Claim 1, **characterized in that** the memory is a non-volatile memory.

3. Tool according to Claim 2, **characterized in that** the memory is a repeatedly re-programmable memory.

4. Tool according to Claim 1, **characterized in that** information about the tool (1, 2) containing the memory can be stored in the memory.

5. Tool according to Claim 4, **characterized in that** information about the structure of the tool (1, 2) can be stored in the memory.

6. Tool according to Claim 4, **characterized in that** information about the number and the type of sensors integrated in the tool (1, 2) or in a machine containing the tool can be stored in the memory.

7. Tool according to Claim 4, **characterized in that** information about suggested values or values used during an earlier use of the tool (1, 2) for parameters that can be set on the tool or on a machine containing the tool can be stored in the memory.

8. Tool according to Claim 4, **characterized in that** information about the load-bearing ability of the tool (1, 2) can be stored in the memory.

9. Tool according to Claim 4, **characterized in that** information about loading of the tool (1, 2) that has taken place can be stored in the memory.

10. Tool according to Claim 4, **characterized in that** information about the previous extent and/or about the maximum extent to be expected of the use of the tool (1, 2) can be stored in the memory.

11. Tool according to Claim 10, **characterized in that** information about the frequency and/or the duration of the use of the tool (1, 2) can be stored in the memory.

12. Tool according to Claim 4, **characterized in that** information about the temperatures and/or forces and/or pressures and/or positions and/or speeds and/or accelerations occurring in or acting on the tool during the use of the tool (1, 2) can be stored in the memory.

13. Tool according to Claim 4, **characterized in that** one or more sensors for detecting the relationships established or processes proceeding in the tool (1, 2) are incorporated in the tool (1, 2) and/or in a machine containing the tool, and **in that** the output signals from the sensors and/or data formed by taking account of the output signals from the sensors can be stored in the tool (1, 2) and/or in a machine containing the tool.

14. Tool according to Claim 4, **characterized in that** information about maintenance or repairs of the tool (1, 2) that have taken place can be stored in the memory.

15. Tool according to Claim 1, **characterized in that** the writing and the reading of the memory is carried out by the circuit integrated in the tool (1, 2).

16. Tool according to Claim 1, **characterized in that** the selection of the data to be written in the memory and/or the writing and reading of the memory is/are carried out by a device provided outside the tool (1, 2).

17. Tool according to Claim 1, **characterized in that** the tool (1, 2) is a thermoforming tool.

18. Tool according to Claim 1, **characterized in that** the tool (1, 2) is a strip-cutting tool.

19. Tool according to Claim 12, **characterized in that** the tool (1, 2) contains a cutting device (1113, 2113) for cutting up the flat material (3), and **in that** a temperature sensor for detecting the temperature of the cutting tool is provided in the tool or in the machine containing the tool.

20. Tool according to Claim 12, **characterized in that** the tool (1, 2) contains a forming sleeve (2111) predefining the predefined different shape and a pre-stretcher (1111) forcing the flat material (3) into the forming sleeve, and **in that** a sensor for detecting the position and/or the speed of the pre-stretcher is provided in the tool or in the machine containing the tool.

21. Tool according to Claim 12, **characterized in that** the tool (1, 2) contains a hold-down (1112), by means of which the flat material (3) is pressed against a support as the said material is changed to the predefined different shape, in order to prevent the flat material slipping, and **in that** a sensor for detecting the force with which the hold-down is pressed against the support is provided in the tool or in the machine containing the tool.

22. Tool according to Claim 12, **characterized in that** the tool (1, 2) contains a hold-down (1112), by means of which the flat material (3) is pressed against a support as the said material is changed to the predefined different shape, in order to prevent the flat material slipping, and **in that** a sensor for detecting the position and/or speed of the hold-down is provided in the tool or in the machine containing the tool.

23. Tool according to Claim 12, **characterized in that** changing the flat material (3) to the predefined different shape is carried out by using compressed air, and **in that** a sensor for detecting the pressure of the compressed air is provided in the tool (1, 2) or in the machine containing the tool.

24. Tool according to Claim 12, **characterized in that** a sensor for detecting the twisting or vibrations of the tool is provided in the tool (1, 2) or in the machine containing the tool.

## Revendications

1. Outil, par le biais duquel un matériau (3) de forme plane peut être amené dans une autre forme prédéfinie, un dispositif de mémoire pour mémoriser des données étant intégré dans l'outil (1, 2), **caractérisé en ce qu'**un circuit est intégré dans l'outil (1, 2), par le biais duquel a lieu une sélection des données à écrire dans le dispositif de mémoire.

2. Outil selon la revendication 1, **caractérisé en ce que** le dispositif de mémoire est un dispositif de mémoire non volatil.

3. Outil selon la revendication 2, **caractérisé en ce que** le dispositif de mémoire est un dispositif de mémoire non programmable de manière répétée.

4. Outil selon la revendication 1, **caractérisé en ce que** des informations concernant l'outil (1, 2) contenant le dispositif de mémoire peuvent être mémorisées dans le dispositif de mémoire.

5. Outil selon la revendication 4, **caractérisé en ce que** des informations concernant la structure de l'outil (1, 2) peuvent être mémorisées dans le dispositif de mémoire.

6. Outil selon la revendication 4, **caractérisé en ce que** des informations concernant le nombre et le type de capteurs intégrés dans l'outil (1, 2) ou dans une machine contenant l'outil peuvent être mémorisées dans le dispositif de mémoire.

7. Outil selon la revendication 4, **caractérisé en ce que** des informations concernant des valeurs proposées ou utilisées dans une utilisation antérieure de l'outil (1, 2) pour des paramètres ajustables sur l'outil ou sur une machine contenant l'outil peuvent être mémorisées dans le dispositif de mémoire.

8. Outil selon la revendication 4, **caractérisé en ce que** des informations concernant la capacité de charge de l'outil (1, 2) peuvent être mémorisées dans le dispositif de mémoire.

9. Outil selon la revendication 4, **caractérisé en ce que** des informations concernant des sollicitations appliquées à l'outil (1, 2) peuvent être mémorisées dans le dispositif de mémoire.

10. Outil selon la revendication 4, **caractérisé en ce que** des informations concernant la portée antérieure et/ou la portion maximale attendue de l'utilisation de l'outil (1, 2) peuvent être mémorisées dans le dispositif de mémoire.

11. Outil selon la revendication 10, **caractérisé en ce que** des informations concernant la fréquence et/ou la durée de l'utilisation de l'outil (1, 2) peuvent être mémorisées dans le dispositif de mémoire.

12. Outil selon la revendication 4, **caractérisé en ce que** des informations concernant les températures et/ou les forces et/ou les pressions et/ou les positions et/ou les vitesses et/ou les accélérations se produisant dans l'outil ou agissant sur l'outil au cours de l'utilisation de l'outil (1, 2) peuvent être mémorisées dans le dispositif de mémoire.

13. Outil selon la revendication 4, **caractérisé en ce qu'**un ou plusieurs capteurs pour détecter des rapports s'établissant dans l'outil (1, 2) ou des opérations se déroulant dans l'outil sont incorporés dans l'outil (1, 2) et/ou dans une machine contenant l'outil, et **en ce que** des signaux de sortie des capteurs et/ou des données formées en tenant compte des signaux de sortie des capteurs peuvent être mémorisés dans le dispositif de mémoire.

14. Outil selon la revendication 4, **caractérisé en ce que** des informations concernant des entretiens ou des réparations effectués de l'outil (1, 2) peuvent être mémorisées dans le dispositif de mémoire.

15. Outil selon la revendication 1, **caractérisé en ce que** la description et la lecture du dispositif de mémoire s'effectuent par le circuit intégré dans l'outil (1, 2).

16. Outil selon la revendication 1, **caractérisé en ce que** la sélection des données à écrire dans le dispositif de mémoire et/ou la description et la lecture du dispositif de mémoire s'effectuent par un dispositif prévu à l'extérieur de l'outil (1, 2).

17. Outil selon la revendication 1, **caractérisé en ce que** l'outil (1, 2) est un outil de thermoformage.

18. Outil selon la revendication 1, **caractérisé en ce que** l'outil (1, 2) est un outil de découpage de bandes.

19. Outil selon la revendication 12, **caractérisé en ce que** l'outil (1, 2) contient un outil de coupe (1113, 2113) pour couper le matériau (3) de forme plane, et **en ce qu'**un capteur de température pour détecter la température du dispositif de coupe est prévu dans l'outil ou dans la machine contenant l'outil.

20. Outil selon la revendication 12, **caractérisé en ce que** l'outil (1, 2) contient une douille de formage (2111) prédéfinissant l'autre forme prédéfinie et un étireur (1111) pressant le matériau (3) de forme plane dans la douille de formage, et **en ce qu'**un capteur pour détecter la position et/la vitesse de l'étireur est prévu dans l'outil ou dans la machine contenant l'outil.

21. Outil selon la revendication 12, **caractérisé en ce que** l'outil (1, 2) contient un serre-flan (1112) par le biais duquel le matériau (3) de forme plane est pressé contre un subjectile lorsqu'il est amené dans l'autre forme prédéfinie, afin d'éviter un glissement du matériau de forme plane, et **en ce qu'**un capteur pour détecter la force avec laquelle le serre-flan est pressé contre le subjectile est prévu dans l'outil ou dans la machine contenant l'outil.

22. Outil selon la revendication 12, **caractérisé en ce que** l'outil (1, 2) contient un serre-flan (1112) par le biais duquel le matériau (3) de forme plane est pressé contre un subjectile lorsqu'il est amené dans l'autre forme prédéfinie, afin d'éviter un glissement du matériau de forme plane, et **en ce qu'**un capteur pour détecter la position et/ou la vitesse du serre-flan est prévu dans l'outil ou dans la machine contenant l'outil.

23. Outil selon la revendication 12, **caractérisé en ce que** le matériau (3) de forme plane est amené dans l'autre forme prédéfinie en utilisant de l'air comprimé, et **en ce qu'**un capteur pour détecter la pression de l'air comprimé est prévu dans l'outil (1, 2) ou dans la machine contenant l'outil.

24. Outil selon la revendication 12, **caractérisé en ce qu'**un capteur pour détecter la torsion ou les vibrations de l'outil est prévu dans l'outil (1, 2) ou dans la machine contenant l'outil.
